(19) Europäisches Patentamt
European Patent Office
Office européen des brevets

(11) **EP 4 382 340 A1**

(12) **EUROPEAN PATENT APPLICATION**

(43) Date of publication:
**12.06.2024 Bulletin 2024/24**

(21) Application number: **22212429.9**

(22) Date of filing: **09.12.2022**

(51) International Patent Classification (IPC):
**B60L 3/00** (2019.01)    **B60L 15/20** (2006.01)
**B60L 58/14** (2019.01)    **B60L 58/15** (2019.01)

(52) Cooperative Patent Classification (CPC):
**B60L 3/0046; B60L 15/20; B60L 58/14;
B60L 58/15;** B60L 2240/22; B60L 2240/423;
B60L 2240/429; B60L 2240/463; B60L 2240/547;
B60L 2240/549; B60L 2250/26

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rimac Technology Ltd.
10431 Sveta Nedelja (HR)**

(72) Inventor: **ARAFA, Zainelabidin Khaled
Zainelabidin Hassan
Mohamed
10090 Zagreb (HR)**

(74) Representative: **Hoffmann Eitle
Patent- und Rechtsanwälte PartmbB
Arabellastraße 30
81925 München (DE)**

(54) **ELECTRIC POWER LIMITER**

(57)    A method for determining one or more torques to be applied by one or more electric motors of a vehicle, the method comprising: obtaining a power request for the one or more electric motors; performing a closed loop control using a discharge battery power limit as a setpoint and an actual battery power as a feedback to obtain a control action; calculating an electric power reference using the power request and the control action; and determining the one or more torques to be applied by the one or more electric motors using the electric power reference.

FIG. 1

EP 4 382 340 A1

**Description**

Technical field

The present invention relates to determining one or more torques to be applied by one or more electric motors of a vehicle.

Technical background

In a battery management system (BMS), estimating actual battery discharge and charge power limits that ensure a safe operation of the battery is one of the main tasks. The actual battery electric power respecting battery electrical power limits ensures that the battery is never pushed to or operated in any undesired states such as undervoltage/overvoltage, undercurrent/overcurrent, undertemperature/overtemperature and undercharge/overcharge. Moreover, if the actual battery electrical power follows the battery electrical power limits in a smooth way, that is, without overshooting, e.g., exceeding the battery electrical power limits, and without oscillating, e.g., without rapid and big changes in the power drawn from the battery in short time intervals, safety of the battery and maximum drivability of the battery can be ensured.

In addition, due to the estimation complexity of actual losses and efficiency of a powertrain, it is often not easy to estimate the desired battery electric power, especially when the actual battery electric power is close to the battery electric power limit. This scenario is, however, oftentimes desired, for example when the goal is to make use of the maximum capability of the battery such as in high performance vehicles but also more generally when striving to use the available resources to their full extent.

An obstacle in this process may arise due to the circumstance that during the process of torque development electric power is converted to mechanical power or that during the process of regenerative braking mechanical power is converted to electric power and both processes are generally not lossfree. In other words, the conversion between mechanical power and electric power involves an efficiency factor, said factor being less than 1. When the electric power is delivered to the motor to have a desired value of the mechanical power, it has to be ensured that the electric power required thereto does not exceed the battery electrical power limits. Therefore, it is desired to be able to estimate accurately the conversion loss such that a maximum available power of a battery to be used without compromising any safety aspects of the battery can be determined. Similar considerations apply to the case of regenerative braking.

Conventional technologies in the field of battery management however often do not meet these requirements and moreover do not provide a resource efficient solution.

For example, conventionally, the efficiency factor may be taken to be a constant and said constant may be chosen such that it is ensured that the battery electrical power limits are not exceeded. However, this conservative approach of merely taking a constant as the efficiency factor may lead to an underestimation of the available battery power, that is, the available power of the battery is estimated to be less than its actual available power since the efficiency factor is taken as a minimum or at most an average of the range of conversion efficiencies. In other words, it may not be possible to draw a power from the battery that is close to the battery electrical power limit due to the conservative approach of using the constant efficiency factor, thus clearly not making best use of the available resources.

An alternative conventional approach may be to use a predetermined offline efficiency map instead of the constant efficiency factor. The predetermined offline efficiency map may for example be simulated from testing done beforehand to consider multiple parameters such as a bus voltage, a temperature of an inverter, a temperature of a motor, a motor speed, a motor torque and an aging factor among others. However, the conversion efficiency (also: powertrain efficiency) is not linear in all its dependencies but rather the various parameters depend in various forms on each other. Moreover, the accurate determination of the predetermined offline efficiency map is not only a multi-dimensional problem which may result in a huge memory usage, but also obtaining a desired accuracy is a difficult task. Accordingly, the performance when using a predetermined offline efficiency map may be limited by an available memory and execution capabilities and there may be no guarantee that the actual electrical power drawn from the battery is matching the estimated electrical power request. Also, using a predetermined offline efficiency map may introduce artifacts or undesired phenomena such as overshooting near the battery electrical power limits, for example due to a slight inaccuracy of the offline efficiency map.

Summary

The above problems, among others, are solved by the subject-matter of the independent claims. Preferred embodiments are given by the subject-matter of the dependent claims.

According to an embodiment of the present invention, there is provided a method for determining one or more torques to be applied by one or more electric motors of a vehicle, the method comprising: obtaining a power request for the one or more electric motors; performing a closed loop control using a battery power limit as a setpoint and an actual battery power as a feedback to obtain a control action; calculating an electric power reference using the power request and the control action; and determining the one or more torques to be applied by the one or more electric motors using the electric power reference.

According to another embodiment of the present invention, there is provided a device to be provided in a vehicle for determining one or more torques to be applied by one or more electric motors of a vehicle, the device configured to: obtain a power request for the one or more electric motors; perform a closed loop control using a battery power limit as a setpoint and an actual battery power as a feedback to obtain a control action; calculate an electric power reference using the power request and the control action; and determine the one or more torques to be applied by the one or more electric motors using the electric power reference.

According to a further embodiment of the present invention, there is provided a vehicle determining one or more torques to be applied by one or more electric motors of the vehicle, the vehicle configured to: obtain a power request for the one or more electric motors; perform a closed loop control using a battery power limit as a setpoint and an actual battery power as a feedback to obtain a control action; calculate an electric power reference using the power request and the control action; and determine the one or more torques to be applied by the one or more electric motors using the electric power reference.

The present invention can provide a technique which can allow to draw a power from the battery that is close to the battery power limit (also the power limit of the battery) while ensuring that the power limit is not exceeded.

Moreover, the present invention is also providing a technique that can allow charging the battery close to the battery power limits, while ensuring that the power limit is not exceeded.


Brief description of the drawings

Embodiments of the present invention, which are presented for better understanding the inventive concepts, but which are not to be seen as limiting the invention, will now be described with reference to the figures in which:

| Figure 1 | shows a flowchart of a method according to an embodiment of the present invention; |
|---|---|
| Figure 2 | shows a schematic model of an example of electric motors and respective wheels of a vehicle; |
| Figure 3 | shows a flowchart of a method according to an embodiment of the present invention; |
| Figure 4 | shows a flowchart of a method according to an embodiment of the present invention; |
| Figures 5a, 5b and 5c | each shows a schematic view of a closed loop control according to an embodiment of the present invention; |
| Figure 6 | shows a flowchart of a method according to an embodiment of the present invention; |
| Figure 7 | shows a flowchart of a method according to an embodiment of the present invention; |
| Figures 8a and 8b | each shows a flowchart of substeps of setting a control reduction ratio; |
| Figure 9 | shows a flowchart of a method according to an embodiment of the present invention; |
| Figure 10 | shows a device embodiment of the present invention; |
| Figure 11 | shows a visual comparison between torque requests and torques to be applied by each electric motor in an example of a vehicle with four electric motors according to the present invention; |
| Figure 12 | shows a graph of a power limit and an actual power of an exemplary method; |
| Figure 13 | shows a graph of a battery power limit, a power request and an actual battery power and a graph of an actual battery voltage and a battery voltage lower limit of an exemplary method; and |
| Figure 14 | shows a graph of a battery power limit, a power request and an actual battery power and a graph of an actual battery voltage and a battery voltage lower limit according to the present invention. |

Detailed description

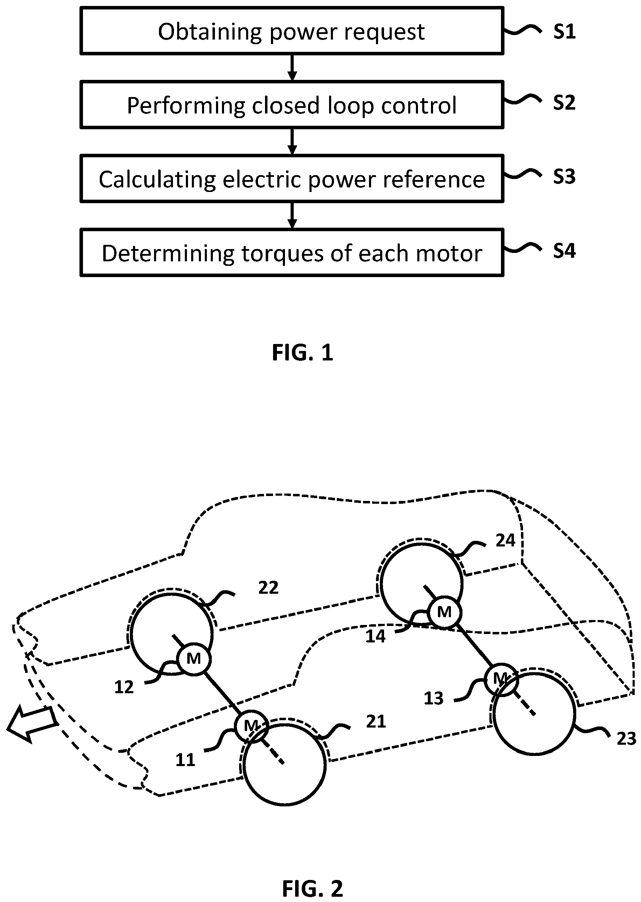

Figure 1 shows a flowchart of a method according to an embodiment of the present invention. A method for determining one or more torques to be applied by one or more electric motors of a vehicle comprises the steps of obtaining a power request for the one or more electric motors (S1); performing a closed loop control using a battery power limit as a setpoint and an actual batter power as a feedback to obtain a control action (S2); calculating an electric power reference using the power request and the control action (S3); and determining the one or more torques to be applied by the one or more electric motors using the electric power reference (S4) .

In the context of the present disclosure, the term "electric motor" is to be understood as not particular limiting and shall include all types of motors, in particular all types of electric motors such as interior permanent magnet synchronous motor, permanent magnet synchronous motor, AC induction motor, permanent magnet synchronous reluctance motor, switched reluctance motor, DC series motor and brushless DC motor, etc.

The vehicle which contains the electric motors may have wheels to which torques applied by the electric motors are applied. The torques applied by the electric motors may therefore be the torques applied to the wheels.

Furthermore, a torque applied by an electric motor has a one-to-one correspondence with its respective electric motor. Accordingly, the number of torques that are applied by the electric motors is equal to the number of the electric motors of the vehicle.

Throughout the application, the expression "each of the one or more electric motors" may be replaced by "each motor" merely for a better readability of the application but not to be construed to deliver a different meaning.

In a first step S1 of obtaining a power request for the one or more electric motors, the power request from the one or more electric motors is obtained. The power request may refer to a summed value of each power requested by each of the one or more electric motors. Also, the power request may be a value that is requested from an electric motor to draw a power corresponding to the amount of the power request from the battery of the vehicle.

In a second step S2 of performing a closed loop control, a battery power limit and an actual battery power are taken. The actual battery power may refer to an actual power level of the battery. The actual battery power may be calculated by multiplying a battery voltage and a battery current as follows:

$$P_{Batt,act} = V_{Batt} \cdot I_{Batt}$$

where $P_{Batt,act}$ is the actual battery power, $V_{Batt}$ is the battery voltage and $I_{Batt}$ is the battery current. The battery voltage may be measured by a voltage measurement unit, which may be embedded in a battery module. Moreover, it is also conceivable that a sensor such as a voltmeter is used or that the battery voltage is calculated indirectly from other parameters. The battery current may be measured by a current measurement unit, which may be embedded in the battery module. Moreover, it is also conceivable that a sensor such as a current meter is used or that the battery current is calculated indirectly from other parameters.

The battery power limit can be either a discharge battery power limit in case of acceleration of a vehicle or a charge battery power limit in case of regenerative braking in a vehicle. In an example of accelerating, the battery power limit may be a maximum value of a power that can be discharged from the battery. Similarly, in an example of regenerative braking, the battery power limit may be a maximum value of a power that can be charged to the battery. Therefore, the actual battery power may be smaller than or equal to the battery power limit. This relation between the actual battery power and the battery power limit can be expressed as follows:

$$P_{Lim,Charge} \leq P_{Batt,act} \leq P_{Lim,Discharge}$$

where $P_{Lim,Charge}$ is the battery power limit for charging/regenerative braking, also simply charge battery power limit, and $P_{Lim,Discharge}$ is the battery power limit for discharging, also simply discharge battery power limit. Note that the terms regenerative braking and charging may be used interchangeably within the present disclosure unless specified differently. Further, the terms charge battery power limit and discharge battery power limit may generally be referred to as battery power limit, in particular if the specifics whether it relates to charging or discharging are not particularly relevant. Further, from the above equations, one can see that within the present disclosure the charge battery power limit is generally negative while the discharge battery power limit is generally positive.

The battery power limit is used as the setpoint of the closed loop control, while the actual battery power is used as the feedback of the closed loop control. In an example, a control input of the closed loop control may be a difference between the battery power limit and the actual battery power. Having the battery power limit as the setpoint and the actual battery power as the feedback, the closed loop control outputs the control action as a control output.

Once the first step S1 and the second step S2 are performed, a third step S3 of calculating an electric power reference is performed. The electric power reference is calculated using the power request obtained from the first step S1 and the control action obtained from the second step S2.

Then, in a fourth step S4 of determining torques of each motor, the one or more torques to be applied by the one or more electric motors are determined using the electric power reference calculated from the third step S3.

A torque to be applied can have a negative value in case of regenerative braking. That is, if a vehicle is decelerating and uses regenerative braking in this process, a sum of the one or more torques to be applied by the one or more electric motors may have a negative value and the battery power limit may be a charge battery power limit. In a case of regenerative braking, an electric motor converts a kinetic energy into a form that can be stored in a battery and thereby slows down a vehicle. Thus, in a case of regenerative braking, the electric motor may be understood as an electric generator. Also, in case of regenerative braking, expressions such as "power drawn from the battery" may be understood as power charged to the battery throughout the description. In other words, when a motor applies a negative torque, it can be understood that the motor is capturing kinetic energy from braking and converting it into an electrical power that charges a battery of a vehicle.

Similarly, if the vehicle is accelerating, a sum of the one or more torques to be applied by the one or more electric motors may have a positive value and the battery power limit may be a discharge battery power limit.

In summary, a torque to be applied is determined such that the corresponding power drawn from the battery does not exceed the power limit of the battery while still allowing to draw a power close to said power limit. In other words, overshooting beyond the battery power limit can be avoided. Specifically, it is possible to avoid the overshooting even when the power request is close to the battery power limit by taking the difference between the battery power limit and the actual battery power as the control input of the closed loop control. This effect may be further amplified by setting the parameters of closed loop control appropriately.

Figure 2 shows a schematic model of an example of electric motors and respective wheels of a vehicle. The vehicle is shown in Figure 2 as a car having four wheels and four motors for illustrative purpose only but is not limited to any specific type of vehicle or any specific number of motors or wheels. For example, the vehicle may be an airplane, a train, a tractor etc. In other words, in the context of the present disclosure the vehicle shall include all types of vehicles that comprise an electric powertrain and a battery with a battery management system that estimates power limits, an inverter and a motor.

For example, the vehicle may have four wheels, a front left wheel 21, a front right wheel 22, a rear left wheel 23 and a rear right wheel 24. The front left wheel 21 and the front right wheel 22 indicate wheels located on a front part of the vehicle and may be referred to as front wheels. The rear left wheel 23 and the rear right wheel 24 indicate wheels located on a rear part of the vehicle and may be referred to as rear wheels. Also, the front left wheel 21 and the rear left wheel 23 indicate wheels located on a left side of the vehicle and may be referred to as right wheels. The front right wheel 22 and the rear right wheel 24 indicate wheels located on a left side of the vehicle and may be referred to as left wheels.

The four motors of the vehicle shown in Figure 2 correspond each to their respective wheels. Therefore, the four motors may be a front left motor 11, a front right motor 12, a rear left motor 13 and a rear right motor 14 each applying a torque to the front left wheel 21, the front right wheel 22, the rear left wheel 23 and the rear right wheel 24. Accordingly, the front left motor 11 and the front right motor 12 may be referred to as front motors and the rear left motor 13 and the rear right motor 14 may be referred to as rear motors. Also, the front left motor 11 and the rear left motor 13 indicate may be referred to as left motors and the front right motor 12 and the rear right motor 14 indicate may be referred to as right motors.

Therefore, in an example of the vehicle being a car as shown in Figure 2, the method explained in Figure 1 may be understood as follows. When a driver gives an input via an accelerator pedal of a vehicle, depending on how much the accelerator pedal is pushed down by the driver, it may be understood as a certain amount of mechanical power requested and correspondingly as a certain amount of torque to be applied. It is noted that this power request is not limited to this case as in fact it is also conceivable that the power request originates from an autonomous virtual driver request, that is, a controller may be the origin of the power request and as such the presence of a human driver is not required. However, the requested amount of power is not necessarily equal to an electric power reference, which is a power that is to be applied by the motor. To ensure safety and maximum drivability of the battery, the electric power reference may be calculated to be a different value from the requested amount of power. By using a control action from a closed control loop using a battery power limit and an actual battery power in calculating the electric power reference, the electric power reference can consider not only the requested amount of power but also the battery power limits which are a maximum power value respective a minimum power value within which the battery can operate, and the actual battery power, which is a real electrical power developed by the battery. Then, by determining a torque to be applied using the electric power reference, the vehicle may be operable with an appropriate torque that respects the battery safety while using its maximum drivability.

This is, for example, particularly useful for a vehicle requiring a maximum usage of a battery. In addition, by adopting a closed loop control in calculation of the electric power reference, it is possible to drive the vehicle smoothly even if the battery of the vehicle is operating close a battery power limit.

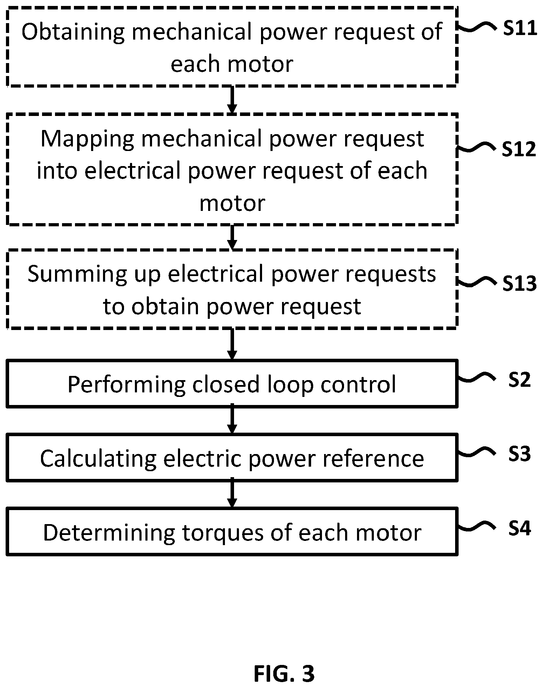

Figure 3 shows a flowchart of a method according to an embodiment of the present invention. Specifically, Figure 3 describes detailed steps of the first step S1 of obtaining the power request for the one or more electric motors and comprises: obtaining a mechanical power request for each of the one or more electric motors (S11); mapping each mechanical power request into an electrical power request for each of the one or more electric motors using an efficiency map (S12); and adding up the electrical power request for each of the one or more electric motors to obtain the power request (S13).

In a step S11 of obtaining mechanical power request of each motor, a mechanical power request for each of the one or more electric motors may be obtained. The mechanical power request may be acquired from a torque request and a motor speed of each of the one or more electric motors as follows:

$$P_{Mech,req,i} = T_{req,i} \cdot \omega_i$$

where $P_{Mech,req,i}$ is a mechanical power request, $T_{req,i}$ is a torque request, $\omega_i$ represents a motor speed, and $i$ is an index indicating the motor, $i$ can be, for example, $fl, fr, rl$ and $rr$ indicating which motor $i$ corresponds to, that is, the front left motor 11, the front right motor 12, the rear left motor 13 and the rear right motor 14 of Fig. 2.

The torque request may be a torque value corresponding to a driver's input to on an accelerator pedal. The torque request may be measured by a sensor such as a reaction torque sensor and a rotary torque sensor or may be calculated indirectly from other parameters. The motor speed may be measured by a sensor such as a tachometer or may be calculated indirectly from other parameters.

After the mechanical power request is obtained from the torque request and the motor speed, the mechanical power request may be mapped into an electrical power request (Step S12). In the mapping of the mechanical power request and the electrical power request, an efficiency map $\eta_i$ may be used. The efficiency map is utilized in mapping the mechanical power request to the electrical power request per each motor as follows:

$$P_{Elec,req,i} = P_{Mech,req,i} \cdot \frac{1}{\eta_i}$$

where $P_{Elec,req,i}$ is the electrical power request for each motor $i$ and $\eta_i$ is the efficiency map for each motor $i$.

In detail, the efficiency map may be an offline generated efficiency map simulated from a dyno testing. For example, the efficiency map may contain data measured by a dynamometer in the dyno testing. The measured data may include a motor speed, a motor torque or a power of a vehicle and may be referred to as the dyno testing data. Then, the efficiency map may be predetermined based on the dyno testing data including at least one of the motor torque, the motor speed and the inverter bus voltage of a respective motor. The expression "at least one of" may indicate only the motor torque, the motor speed and the inverter bus voltage. In this case, the efficiency map may also be represented by $\eta(T_i, \omega_i, V_i)$. Also, the efficiency map may be generated based either one motor or a plurality of motors. Moreover, the efficiency map can be a loss map mapping a mechanical power and an electrical power as well.

In this case, the memory usage by the efficiency map may be saved by using only the motor torque, motor speed and the inverter bus voltage. Meanwhile, using the efficiency map may achieve more precise estimation of the electrical power request for each motor based on the mechanical power for each motor.

Once the electrical power request is acquired using the efficiency map, the electrical power request for each of the one or more electric motors (Step S13) may be summed up to obtain the power request. Thus, the power request may be expressed as follows:

$$P_{Elec,req,tot} = \sum_i P_{Elec,req,i}$$

where $p_{Elec,req,tot,i}$ indicates the power request for each motor $i$.

Saving of computational costs may be achieved by having a condition for performing of the closed loop control. In detail, the method may identify when the closed loop control may be advantageous and when the closed loop control may not be necessary. In other words, in an example according to the present disclosure, the closed loop control may only be performed if a condition is fulfilled, wherein this condition may relate to various parameters of the requested powers, the battery power limit and combinations thereof.

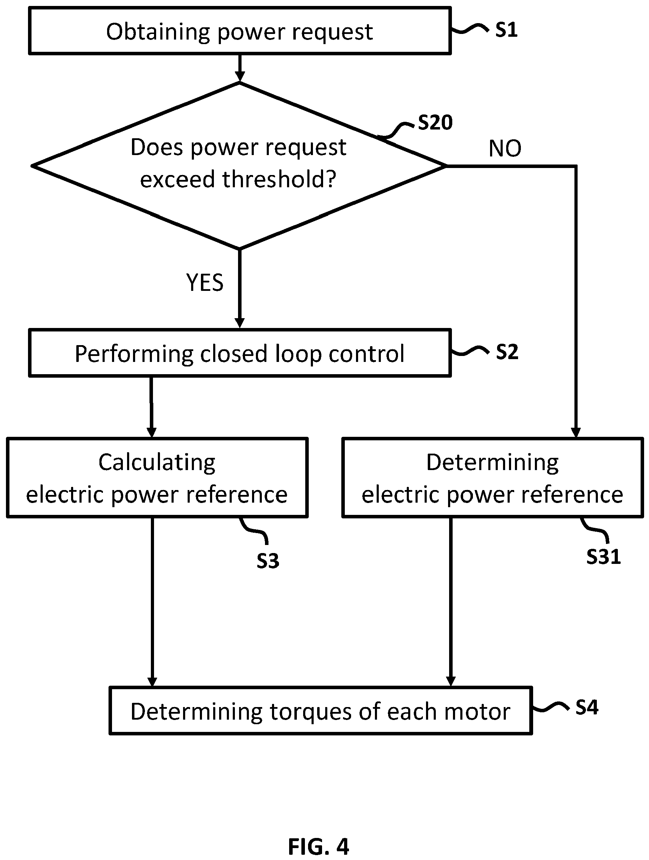

Figure 4 shows a flowchart of a method according to an embodiment of the present invention. Specifically, Figure 4 describes detailed steps of the method with the condition for performing of the closed loop control.

For example, in a step S20, it may be determined of the power request exceed a predetermined threshold. The closed loop control may be executed (S2) if a result of the step S20 is YES, that is, the power request exceeds a predetermined threshold. If a result of the step S20 is NO, that is, if the power request does not exceed the predetermined threshold, a control by the closed loop control may not be necessary since there may be no danger that the battery is pushed to an undesired state. Only when the power request exceeds the predetermined value, the closed loop control may be performed to avoid that the battery power limit is exceeded, which may lead to a sudden torque cut-off, or a powertrain shutdown caused by breaching the discharge battery limit.

If the power request does not exceed the predetermined threshold, the electric power reference may be determined using the power request (S31), that is, without the control action. In other words, in this case the torque request will be directly commanded without any involvement of the closed loop control.

In one embodiment of the present invention, the predetermined threshold may be a predetermined percentage of the battery power limit. Preferably, the predetermined percentage may be set to a percentage in the range of 90 to 95 percent. If a speed of calculation of the control and a communication between the various components is higher, the predetermined percentage may be set up to a higher value as well, for example up to 98 percent.

By considering a relative value of the battery power limit as the predetermined threshold, it is possible to appropriately perform the closed loop control depending on the battery power limit. Also, by choosing the predetermined threshold that is close enough to benefit from the closed loop control but also distant enough to save the computational cost, it may be possible to appropriately ensure the safety of the battery and achieve the maximum drivability of the battery. Moreover, choosing the predetermined threshold close enough may allow to prevent modifying the power request as much as possible, while distant enough may avoid a sudden spike in the requested power and thus may give the closed loop control space to operate in view of communication delays enough.

In another embodiment of the present invention, the predetermined threshold may be, a predetermined value less than the battery power limit. For example, in a case that the battery power limit is 1000kW, the predetermined threshold may be set to a value that is 50kW less than the battery power limit.

In both embodiments, the predetermined threshold is considered based on the battery power limit. By having the predetermined threshold based on the battery power limit, it is possible to appropriately perform the closed loop control for different batteries with different battery power limits.

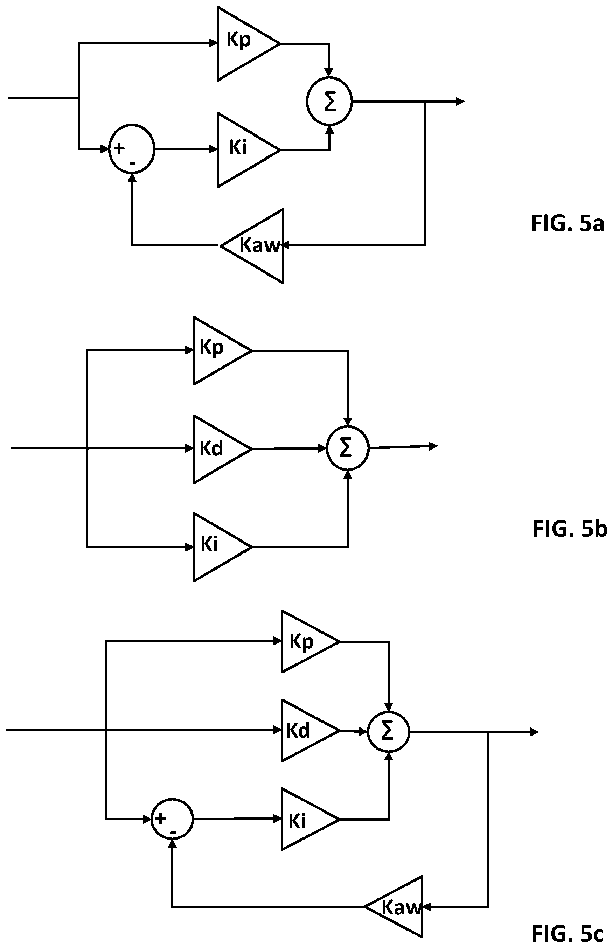

Examples of the closed loop control are shown in Figure 5a, 5b and 5c. For example, the closed loop control shown in Figure 5a may comprise a proportional controller, and an integral controller using an anti-windup mechanism. The closed loop control shown in Figure 5b may comprise a proportional controller, an integral controller, and a derivative controller. The closed loop control shown in Figure 5c may comprise a proportional controller, an integral controller using an anti-windup mechanism, and a derivative controller.

In some cases, the saturation of the controller may be calculated by considering the minimum of the electrical power request and the battery power limit.

The proportional controller may have a proportional gain of $K_p$, the integral controller may have an integral gain of $K_i$, and the derivative controller may have a derivative gain of $K_d$. Merely for an illustrative purpose, the closed loop control is shown without an integrator in an integral path or a derivative in a derivative path. Thus, a path with the proportional gain should be interpreted as the proportional path which applies a proportional control on the control input, a path with the integral gain should be interpreted as the integral path which applies an integral control on the control input, and a path with the derivative gain should be interpreted as the derivative path which applies a derivative control on the control input.

Moreover, the closed control loop may have an anti-windup path. In general, an integral path including an anti-windup path in a controller may be advantageous especially if there is a solid information about a saturation limit of the controller. In case a control action of the controller is aggressive, or any external disturbances/noises on the DC bus, or poor estimation of the power limits in some operating regions, this may lead to a sudden drop in an output of the controller, relying only on an integral path may result in a slow response to the sudden drop. Since the integral controller may be tuned to be relatively slow in rapid changes compared to the proportional controller and the derivative controller to avoid overshooting in the limits, in case of a fast drop in the limits, the integral controller may be discharged faster using the anti-windup mechanism. Therefore, the anti-windup path to be used with the integral path may achieve speed-up in performance of the closed loop control, for example, by discharging the accumulated error in the integrator path.

Thus, preferably, the integral path may be used with the anti-windup path. The anti-windup path is shown in Figure 5a and 4c only with an anti-windup gain for illustrative purpose, but the anti-windup path should be interpreted as a path including an operator for an anti-windup function.

The anti-windup path and the derivative path may not exclude each other, and the closed loop control may comprise all components of a PID controller and an anti-windup path as shown in Figure 5c. Therefore, the closed loop control of the present invention may be at least a PI controller with an anti-windup path, a PID controller, or a PID controller with an anti-windup path.

While the same closed control loop can be used in both cases of discharging and charging of a battery, that is, in both cases of accelerating and regenerative braking, the closed control loop may be tuned differently. For example, the integral gain and/or the anti-windup gain may be set to 0 in case of discharging the battery or the respective coefficients of the controllers may have entirely different values for discharging and charging.

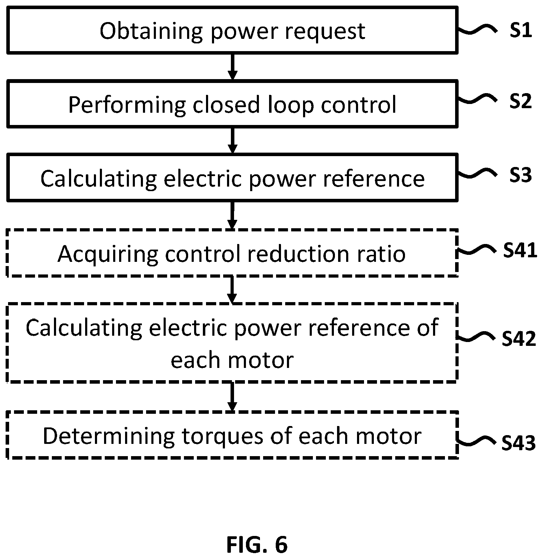

Figure 6 shows a flowchart of a method according to an embodiment of the present invention. Specifically, Figure 6 describes detailed steps of the fourth step S4 of determining the one or more torques to be applied by the one or more electric motors using the electric power reference which comprises: acquiring a control reduction ratio using the power request and the electric power reference (S41); calculating an electric power reference for each of the one or more electric motors based on the electrical power request for the each of the one or more electric motors and the control reduction ratio (S42); and determining the one or more torques to be applied by each of the one or more electric motors based on the electric power reference of each of the one or more electric motors (S43).

In step S41 of acquiring control reduction ratio, the control reduction ratio may be acquired using the power request and the electric power reference as follows:

$$\varphi = \frac{P_{Elec,ref}}{P_{Elec,req,tot}}$$

where $\varphi$ is the control reduction ratio and $P_{Elec,ref}$ is the electric power reference calculated in step S3.

Then, in step S42 of calculating electric power reference of each motor, the electric power reference for each of the one or more electric motors may be calculated based on the electric power request for the each of the one or more electric motors and the control reduction ratio as follows:

$$P_{Elec,ref,i} = P_{Elec,req,i} \cdot \varphi$$

Where $P_{Elec,ref,i}$ indicates the electric power reference for each motor $i$. In this way, the electric power reference, which is a value to be used in determining the torques of each motor, can be calculated for each motor respecting the electric power request for each motor.

In step S43 of determining torques of each motor, the one or more torques to be applied by the one or more electric motors may be determined based on the electric power reference of each of the one or more electric motors calculated from step S42. In this way, a precise determination of torque references of each motor is possible since each of the torque references can be determined based on the electric power reference for each respective motor.

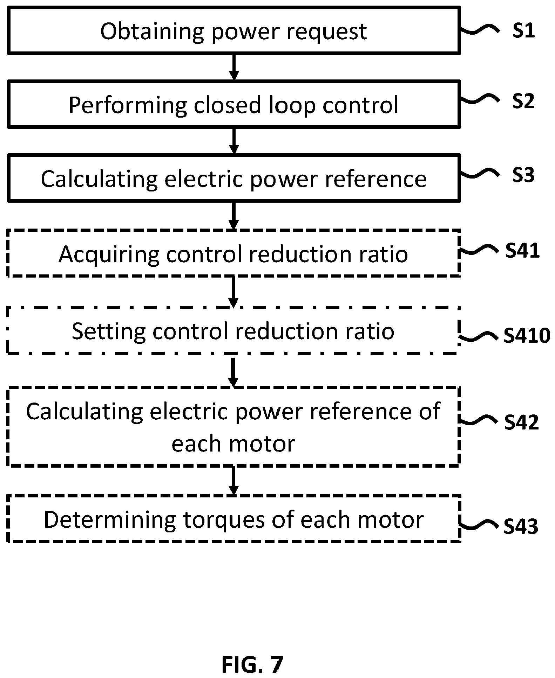

Figure 7 shows a flowchart of a method according to an embodiment of the present invention. In the embodiment of the present invention, the method may further comprise step S410 of setting the acquired control reduction ratio such that a yaw rate of the vehicle is conserved, before calculating the electric power reference for each of the one or more electric motors. In other words, the control reduction ratio may be set to conserve the yaw rate of the vehicle between step S41 and step S42. By setting the control reduction ratio to conserve the yaw rate, driving of the vehicle can be controlled to be stable without enhancing the yaw rate.

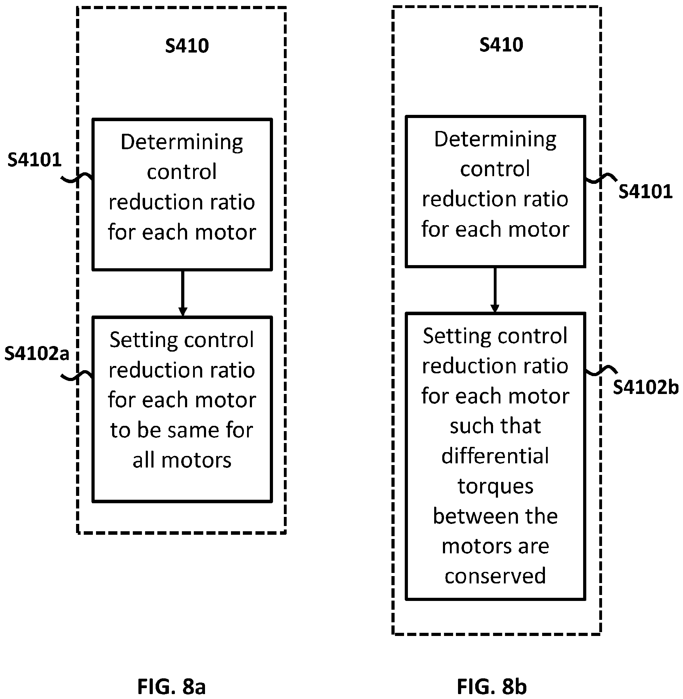

Figure 8a shows a flowchart of substeps of setting a control reduction ratio according to another embodiment of the present invention. In detail, the step S410 of setting control reduction ratio may comprise: determining a control reduction ratio for each of the one or more electric motors (S4101); and setting the control reduction ratio for each of the one or more electric motors to be same for all electric motors of the vehicle (S4102a).

In step S4101 of determining a control reduction ratio for each of the one or more electric motors, the control reduction ratio may be determined for each motor. Then, in step S4102a, the control reduction ratio for each of the one or more electric motors may be set to be same for all motors in the vehicle. By setting the control reduction ratio for each motor same for all electric motors, relative distribution of the power request may be kept and any enhancement in the yaw rate of the vehicle may be avoided. The relative distribution of the power request may indicate relative differences between the electric power requests of the front and the rear motors and/or the left and the right motors.

The control reduction ratio for each motor may be set to be same for all motors, if there is no additional controller configured to apply different torques to the electric motors of the vehicle to enhance an intended yaw moment of the vehicle by commanding different torques to the electric motors. However, if there is an additional controller configured to apply different torques to the electric motors, the control reduction ratio for each motor may be set differently to keep the difference in yaw rate constant. For example, if the additional controller is configured to apply different torques to each electric motor to use maximum traction of each tire and to thereby enhance stability of the vehicle by providing more grip to the ground, setting the control reduction ratio for each motor same for all motors may actually change the intended yaw moment and thus be affecting the control result of the additional controller. In this case, the control reduction ratio for each motor should be readjusted to conserve the constraints defined by the additional controller.

Figure 8b shows a flowchart of substeps of setting a control reduction ratio according to yet another embodiment of the present invention. In detail, step S410 of setting control reduction ratio may comprise: determining a control reduction ratio for each of the one or more electric motors (S4101); and setting the control reduction ratio for each of the one or more electric motors such that differential torques between the electric motors of a same axle are conserved (S4102b).

In the embodiment of the present invention, a step S4101 of determining a control reduction ratio for each of the one or more electric motors may be same as the step S4101 shown in Figure 8a. Then, in step S4102b, the control reduction ratio for each of the one or more electric motors such that differential torques between the electric motors of a same axle are conserved.

In case there is a controller configured to apply differential torques to each of the electrical motors, such as when all wheel torque vectoring is active in driving of the vehicle, the control reduction ratio for each motor may be set different for each motor since all motors are controlled differently in this case. Still, the control reduction ratio may be set to conserve the yaw rate of the vehicle by applying different control reduction ratio for each motor. Here, "all wheel torque vectoring" refers to a method of controlling the torque of each wheel respective motor individually.

By setting the control reduction ratio for each motor differently to conserve the difference in torques between the electric motors of a same axle, a stable driving without enhanced yaw torque between the electric motors of the same axle can be achieved. The axle may be a front drive axle or a rear drive axle of the vehicle, that is, the electric motors of a same axle may be the front motors or the rear wheels.

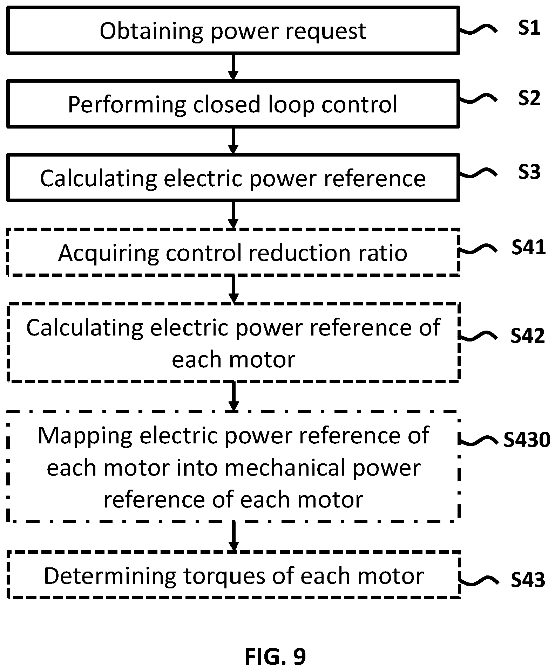

Figure 9 shows a flowchart of a method according to an embodiment of the present invention. In the embodiment of the present invention, the method may further comprise a step S430 of mapping the electric power reference for each of the one or more electric motors into a mechanical power reference for each of the one or more electric motors using the efficiency map, before determining the one or more torques to be applied by each of the one or more electric motors based on the mechanical power reference for each of the one or more electric motors. In other words, the electric power reference of each motor may be mapped into the mechanical power reference of each motor between step S42 and step S43.

By mapping the electric power reference for each motor into the mechanical power reference for each motor, the mechanical loss in the powertrain can be considered and a more precise control of the vehicle may be possible.

In an embodiment of the present invention, mapping of the electric power reference for each of the one or more electric motors into the mechanical power reference for each of the one or more electric motors may use the efficiency map evaluated as follows:

$$P_{Mech,ref,i} = P_{Elec,ref,i} \cdot \eta_i$$

where $P_{Mech,ref,i}$ is the mechanical power reference for each motor $i$.

The efficiency map may be the same efficiency map used in Step 12 but utilized in mapping the electrical power request to the mechanical power request. Thus, the efficiency map may be evaluated with at least one of a motor torque, a motor speed and an inverter bus voltage of a respective motor. The expression "at least one of" may indicate only the motor torque, the motor speed and the inverter bus voltage. In this case, the efficiency map may also be represented by $\eta(T_i, \omega_i, V_i)$. Therefore, the method of the embodiment does not require any additional measurement to achieve the efficiency map nor a space to save a new efficiency map. Mapping of the electric power reference for each motor into the mechanical power reference for each motor may be done on a new operating point of the same efficiency map.

Once the mechanical power reference for each of the one or more electric motors is mapped, the one or more torques to be applied by each of the one or more electric motors based on the mechanical power reference for each of the one or more electric motors may be determined as follows:

$$T_{ref,i} = P_{Mech,ref,i} \cdot \frac{1}{\omega_i}$$

where $T_{ref,i}$ is a torque to be applied by an electric motor $i$ and $\omega_i$ is a motor speed for the electric motor $i$.

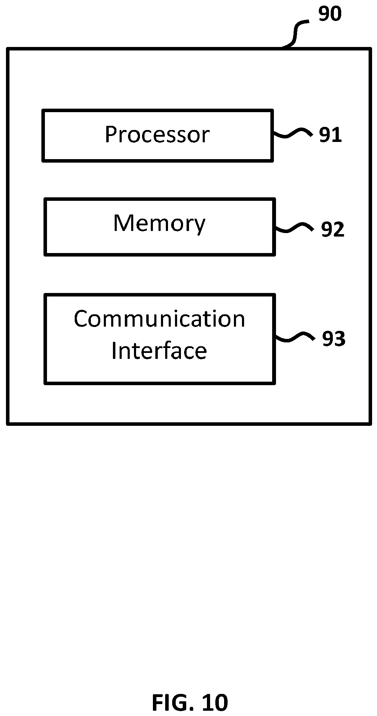

Figure 10 shows a device embodiment of the present invention. This device can be, for example, a powertrain control unit or a separate vehicle dynamics control unit embedded in a vehicle. The device 90 may comprise a processor 91, a memory 92 as well as a communication interface 93. The memory 92 may store code or may have access to code that instructs the processor 91 to perform the steps of any method embodiment of the present invention as elaborated above. The communication interface 93 may be adapted for receiving communication data over a network. The network may be wired or wireless network.

The device 90 can generally be a computer, an electronic control unit (ECU), etc.

The processor 91 may be embodied by one or more processing units, such as a central processing unit (CPU), or may also be provided by a microcontroller unit (MCU).

The memory 92 which can be embodied by local memory which may include but not limited to, a read-only memory (ROM), a random-access memory (RAM), a programmable read-only memory (PROM) and an electrically erasable programmable read-only memory (EEPROM).

The communication interface 93 may be adapted for providing and/or receiving data from the processor 91 and for providing and/or receiving data from the memory 92 over a communication network. The communication network may be a wired or a wireless network.

The device 90 may be configured to: obtain a power request for the one or more electric motors; perform a closed loop control using a battery power limit as a setpoint and an actual battery power as a feedback to obtain a control action; calculate an electric power reference using the power request and the control action; and determine the one or more torques to be applied by the one or more electric motors using the electric power reference. In this case, the device 90 can be considered to be a part of the vehicle.

Alternatively, the device 90 schematically shown in Figure 10 might be the vehicle that determines one or more torques to be applied by one or more electric motors of the vehicle, the vehicle configured to: obtain a power request for the one or more electric motors; perform a closed loop control using a battery power limit as a setpoint and an actual battery power as a feedback to obtain a control action; calculate an electric power reference using the power request and the control action; and determine the one or more torques to be applied by the one or more electric motors using the electric power reference.

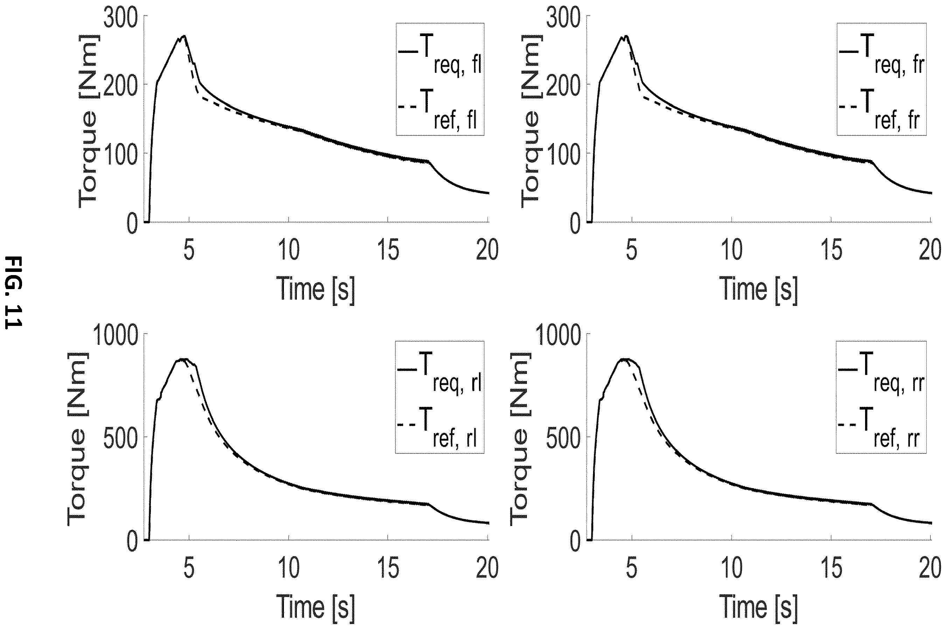

The embodiments of the present invention described above achieve beneficial effects of the addressed technical problem. Technical effects of the embodiments may be shown in the several different tests. For example, Figure 11 shows a visual comparison between torque requests and torques to be applied by each electric motor according to an embodiment of the present invention in an example of a vehicle with four electric motors. As can be seen in Figure 11, each of the one or more torques to be applied by each of the one or more electric motors does not exceed a corresponding torque request.

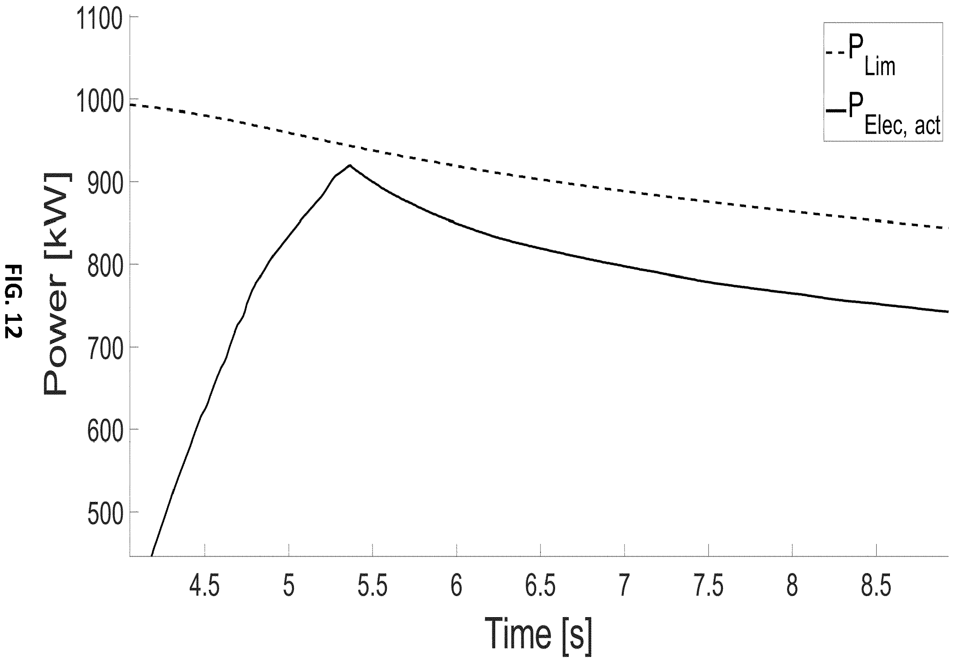

Figure 12, 13 and 14 show different graphs according to different methods including a method according to the present invention. Specifically, Figures 12, 13 and 14 are depicted in case of accelerating, that is, when a battery is discharging.

Figure 12 shows a graph of a power limit and an actual power of an exemplary method. In the exemplary method, the efficiency factor is taken as a constant, preferably chosen such that it can be ensured that the actual power is smaller than the battery power limit. As a consequence, the available battery power may be underestimated and it may not be possible to draw a power from the battery that is close to the battery electrical power limit, thus not making make best use of the available resources.

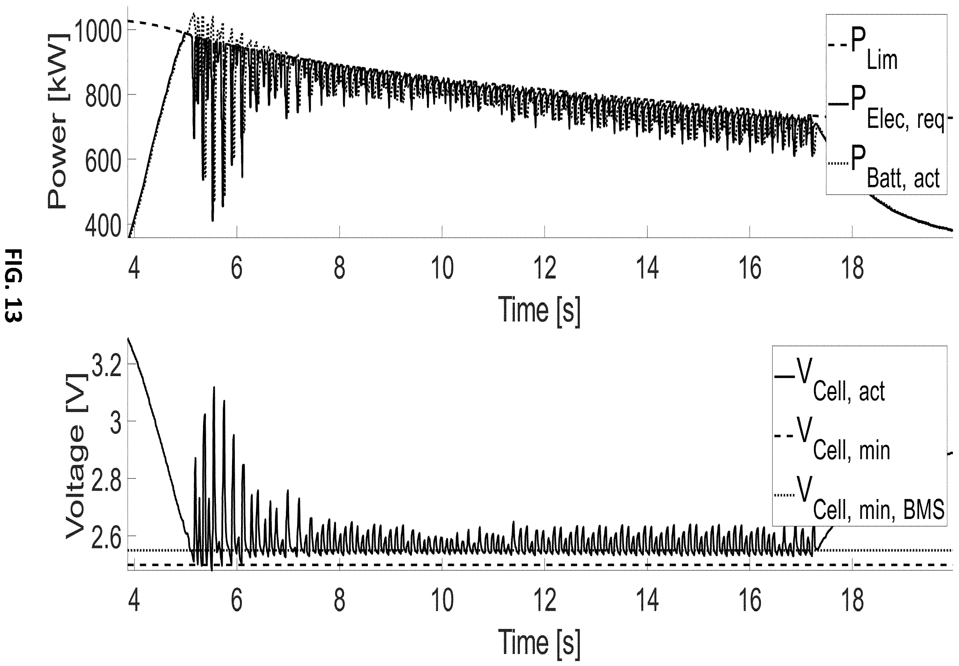

Figure 13 shows a graph of a battery power limit, a power request and an actual battery power and a graph of an actual battery voltage and a battery voltage lower limit of another exemplary method. In the method using only a predetermined offline efficiency map instead of the constant efficiency factor, it may still be hard to guarantee that the actual electrical power drawn from the battery is matching the estimated electrical power request. Since the predetermined offline efficiency map requires a huge memory usage to include all potentially relevant factors, obtaining a desired accuracy can be difficult due to limited memory and execution capabilities. Also, artifacts or undesired phenomena such as overshooting near the battery electrical power limits may be introduced in case of using the predetermined offline efficiency map that is not completely accurate.

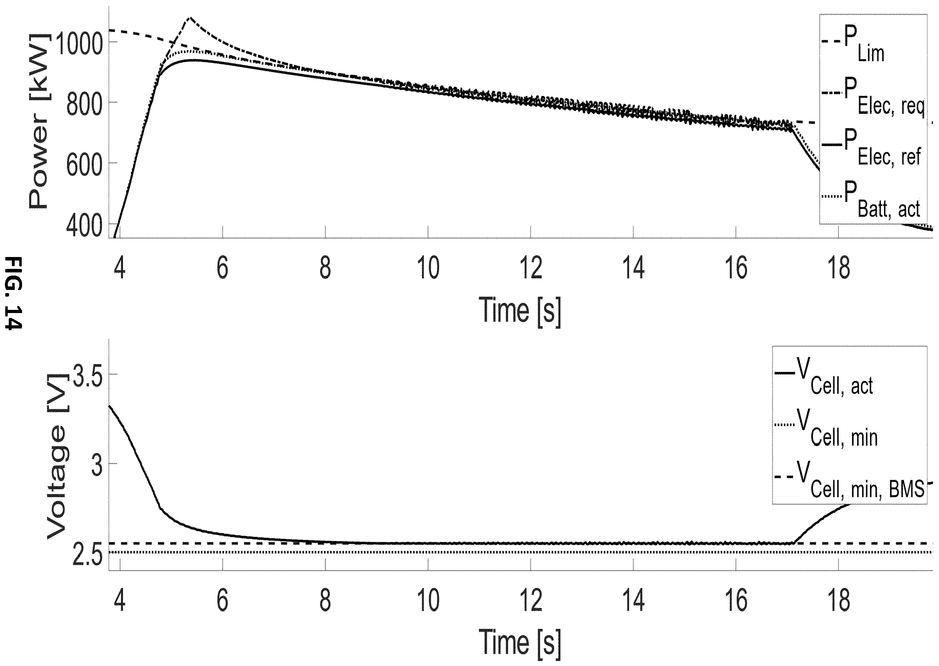

Figure 14 shows a graph of a battery power limit, a power request and an actual battery power and a graph of an actual battery voltage and a battery voltage lower limit of the present invention. In contrary to the above-mentioned method using a predetermined offline efficiency map, a method of an embodiment of the present invention can compensate errors in the predetermined offline efficiency map near the battery electrical power limits by reducing torque request to keep the actual battery power within the battery electrical power limits. Furthermore, a smooth asymptotic behaviour without overshooting can be achieved.

Although detailed embodiments have been described, these only serve to provide a better understanding of the invention defined by the independent claims and are not to be seen as limiting to the present invention.

**Claims**

1. A method for determining one or more torques to be applied by one or more electric motors of a vehicle, the method comprising:

    obtaining a power request for the one or more electric motors;

performing a closed loop control using a battery power limit as a setpoint and an actual battery power as a feedback to obtain a control action;
calculating an electric power reference using the power request and the control action; and
determining the one or more torques to be applied by the one or more electric motors using the electric power reference.

2. The method according to claim 1, wherein obtaining the power request for the one or more electric motors comprises:

obtaining a mechanical power request for each of the one or more electric motors;
mapping each mechanical power request into an electrical power request for each of the one or more electric motors using an efficiency map; and
adding up the electrical power request for each of the one or more electric motors to obtain the power request.

3. The method according to claim 2, wherein the efficiency map is predetermined using at least one of motor torque, motor speed and inverter bus voltage of the one or more electric motors.

4. The method according to any of claims 1 to 3, wherein

performing the closed loop control is executed if the power request exceeds a predetermined threshold; and optionally
the electric power reference is determined using the power request if the power request does not exceed the predetermined threshold.

5. The method according to any of claims 1 to 4, wherein the closed loop control comprises:

a proportional controller, and an integral controller using an anti-windup mechanism; or
a proportional controller, an integral controller, and a derivative controller; or
a proportional controller, an integral controller using an anti-windup mechanism, and a derivative controller.

6. The method according to any of claims 1 to 5, wherein determining the one or more torques to be applied by the one or more electric motors comprises:

acquiring a control reduction ratio using the power request and the electric power reference;
calculating an electric power reference for each of the one or more electric motors based on the electrical power request for the each of the one or more electric motors and the control reduction ratio; and
determining the one or more torques to be applied by each of the one or more electric motors based on the electric power reference of each of the one or more electric motors.

7. The method according to claim 6, wherein the method further comprises:
setting the acquired control reduction ratio such that a yaw rate of the vehicle is conserved, before calculating the electric power reference for each of the one or more electric motors.

8. The method according to claim 7, wherein setting the control reduction ratio comprises:

determining a control reduction ratio for each of the one or more electric motors; and
setting the control reduction ratio for each of the one or more electric motors to be same for all electric motors of the vehicle.

9. The method according to claim 7, wherein setting the control reduction ratio comprises:

determining a control reduction ratio for each of the one or more electric motors; and
setting the control reduction ratio for each of the one or more electric motors such that differential torques between the electric motors of a same axle are conserved.

10. The method according to any of claims 6 to 9, wherein the method further comprises:
mapping the electric power reference for each of the one or more electric motors into a mechanical power reference for each of the one or more electric motors using the efficiency map, before determining the one or more torques to be applied by each of the one or more electric motors based on the mechanical power reference for each of the one or more electric motors.

11. The method according to claim 12, wherein mapping of the electric power reference for each of the one or more electric motors into the mechanical power reference for each of the one or more electric motors uses the efficiency map evaluated.

12. The method according to any of claims 1 to 11, wherein
if the battery power limit is smaller than the power request, the electric power reference is calculated using the battery power limit and the control action.

13. The method according to any of claims 1 to 12, wherein

if the vehicle is accelerating, a sum of the one or more torques to be applied by the one or more electric motors has a positive value and the battery power limit is a discharge battery power limit; and
if the vehicle is decelerating using regenerative braking, a sum of the one or more torques to be applied by the one or more electric motors has a negative value and the battery power is a charge battery power limit, wherein optionally the closed loop control is tuned differently for the case of the vehicle accelerating and the case of the vehicle decelerating using regenerative braking.

14. A device to be provided in a vehicle for determining one or more torques to be applied by one or more electric motors of a vehicle, the device configured to:

obtain a power request for the one or more electric motors;
perform a closed loop control using a battery power limit as a setpoint and an actual battery power as a feedback to obtain a control action;
calculate an electric power reference using the power request and the control action; and
determine the one or more torques to be applied by the one or more electric motors using the electric power reference.

15. A vehicle determining one or more torques to be applied by one or more electric motors of the vehicle, the vehicle configured to:

obtain a power request for the one or more electric motors;
perform a closed loop control using a battery power limit as a setpoint and an actual battery power as a feedback to obtain a control action;
calculate an electric power reference using the power request and the control action; and
determine the one or more torques to be applied by the one or more electric motors using the electric power reference.

| Obtaining power request | S1 |

| Performing closed loop control | S2 |

| Calculating electric power reference | S3 |

| Determining torques of each motor | S4 |

**FIG. 1**

**FIG. 2**

```
┌ ─ ─ ─ ─ ─ ─ ─ ─ ─ ─ ─ ─ ─ ─ ─ ─ ─ ┐
╎   Obtaining mechanical power request of   ╎  ⌇‿ S11
╎              each motor                    ╎
└ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ┐
╎    Mapping mechanical power request    ╎
╎    into electrical power request of each ╎  ⌇‿ S12
╎                motor                    ╎
└ ─ ─ ─ ─ ─ ─ ─ ─ ─ ─ ─ ─ ─ ─ ─ ─ ─ ┘
                    │
                    ▼
┌ ─ ─ ─ ─ ─ ─ ─ ─ ─ ─ ─ ─ ─ ─ ─ ─ ─ ┐
╎   Summing up electrical power requests ╎  ⌇‿ S13
╎          to obtain power request        ╎
└ ─ ─ ─ ─ ─ ─ ─ ─ ─ ─ ─ ─ ─ ─ ─ ─ ─ ┘
                    │
                    ▼
┌───────────────────────────────────┐
│      Performing closed loop control       │  ‿ S2
└───────────────────────────────────┘
                    │
                    ▼
┌───────────────────────────────────┐
│      Calculating electric power reference  │  ‿ S3
└───────────────────────────────────┘
                    │
                    ▼
┌───────────────────────────────────┐
│     Determining torques of each motor    │  ‿ S4
└───────────────────────────────────┘
```

**FIG. 3**

Obtaining power request — S1

Does power request exceed threshold? — S20

NO

YES

Performing closed loop control — S2

Calculating electric power reference

S3

Determining electric power reference

S31

Determining torques of each motor — S4

**FIG. 4**

FIG. 5a

FIG. 5b

FIG. 5c

Obtaining power request — S1

Performing closed loop control — S2

Calculating electric power reference — S3

Acquiring control reduction ratio — S41

Calculating electric power reference of each motor — S42

Determining torques of each motor — S43

**FIG. 6**

| Obtaining power request | S1 |
| Performing closed loop control | S2 |
| Calculating electric power reference | S3 |
| Acquiring control reduction ratio | S41 |
| Setting control reduction ratio | S410 |
| Calculating electric power reference of each motor | S42 |
| Determining torques of each motor | S43 |

**FIG. 7**

**S410**

S4101

Determining control reduction ratio for each motor

S4102a

Setting control reduction ratio for each motor to be same for all motors

**FIG. 8a**

**S410**

Determining control reduction ratio for each motor

S4101

Setting control reduction ratio for each motor such that differential torques between the motors are conserved

S4102b

**FIG. 8b**

Obtaining power request — S1

Performing closed loop control — S2

Calculating electric power reference — S3

Acquiring control reduction ratio — S41

Calculating electric power reference of each motor — S42

Mapping electric power reference of each motor into mechanical power reference of each motor — S430

Determining torques of each motor — S43

**FIG. 9**

**90**

| Processor | **91** |
| Memory | **92** |
| Communication Interface | **93** |

**FIG. 10**

FIG. 11

EP 4 382 340 A1

FIG. 12

FIG. 13

FIG. 14

Europäisches
Patentamt

European
Patent Office

Office européen
des brevets

## EUROPEAN SEARCH REPORT

Application Number

EP 22 21 2429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 055 572 A2 (GM GLOBAL TECH OPERATIONS INC [US]) 6 May 2009 (2009-05-06) | 1-3, 10-15 | INV. B60L3/00 B60L15/20 B60L58/14 B60L58/15 |
| Y | * paragraphs [0040], [0079], [0083], | 5-9 | |
| A | [0091], [0099] – [0112]; figures 1-12 * | 4 | |
| | ----- | | |
| Y | US 2006/022642 A1 (MCGEE RYAN [US] ET AL) 2 February 2006 (2006-02-02) | 5 | |
| A | * paragraphs [0011], [0012], [0024]; figures 1-6 * | 1-4,6-15 | |
| | ----- | | |
| Y | DE 10 2019 105252 A1 (FORD GLOBAL TECH LLC [US]) 12 September 2019 (2019-09-12) * paragraphs [0003] – [0005], [0034]; figures 1-3 * | 6-9 | |
| | ----- | | |

TECHNICAL FIELDS
SEARCHED        (IPC)

B60L

The present search report has been drawn up for all claims

| Place of search | Date of completion of the search | Examiner |
|---|---|---|
| The Hague | 17 April 2023 | Schury, Dominik |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 2429

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2023

| Patent document cited in search report | | Publication date | Patent family member(s) | | Publication date |
|---|---|---|---|---|---|
| EP 2055572 | A2 | 06-05-2009 | CN | 101508296 A | 19-08-2009 |
| | | | EP | 2055572 A2 | 06-05-2009 |
| | | | US | 2009118080 A1 | 07-05-2009 |
| US 2006022642 | A1 | 02-02-2006 | NONE | | |
| DE 102019105252 | A1 | 12-09-2019 | CN | 110239360 A | 17-09-2019 |
| | | | DE | 102019105252 A1 | 12-09-2019 |
| | | | US | 2019275994 A1 | 12-09-2019 |

EPO FORM P0459

For more details about this annex : see Official Journal of the European Patent Office, No. 12/82